# EUROPÄISCHE PATENTANMELDUNG

(11) **EP 2 112 400 A2**
(43) Veröffentlichungstag der Anmeldung: **28.10.2009**
(21) Anmeldenummer: 09158219.7
(22) Anmeldetag: 20.04.2009
(51) Int. Cl.: F16F 9/02, F16F 15/121, F16F 15/16

(54) **Torsionsschwingungsdämpfer, insbesondere für den Antriebsstrang eines Fahrzeugs**

(30) Priorität: 24.04.2008 DE 102008001355
(71) Anmelder: ZF Friedrichshafen AG, 88038 Friedrichshafen (DE)
(72) Erfinder: Orlamünder, Andreas, 97453 Schonungen (DE)

(57) **Zusammenfassung**

Eine Torsionsschwingungsdämpferanordnung, insbesondere für den Antriebsstrang eines Fahrzeugs, umfasst eine Primärseite und eine gegen die Wirkung einer Dämpferfluidanordnung um eine Drehachse bezüglich der Primärseite drehbare Sekundärseite, wobei die Dämpferfluidanordnung wenigstens eine bei Relativdrehung der Primärseite bezüglich der Sekundärseite durch das Fluid belastete Gasfedereinheit (16) mit einem durch ein Trennelement (38) von im Fluid getrennten Gasvolumen (40) in einem Zylinder (36) umfasst, wobei das Trennelement (38) in Abhängigkeit von der Druckdifferenz des Drucks des Fluids und des Gasdrucks in dem Zylinder (36) verschiebbar ist und in Abhängigkeit von der Druckdifferenz verformbar ist.

## Beschreibung

Die vorliegende Erfindung betrifft eine Torsionsschwingungsdämpferanordnung, insbesondere für den Antriebsstrang eines Fahrzeugs, umfassend eine Primärseite und eine gegen die Wirkung einer Dämpferfluidanordnung um eine Drehachse bezüglich der Primärseite drehbare Sekundärseite, wobei die Dämpferfluidanordnung wenigstens eine bei Relativdrehung der Primärseite bezüglich der Sekundärseite durch ein Fluid belastete Gasfedereinheit mit einem durch ein Trennelement von dem Fluid getrennten Gasvolumen in einem Zylinder umfasst.

Derartige nach Art eines Gasfeder-Torsionsschwingungsdämpfers bzw. - zweimassenschwungrads aufgebaute Torsionsschwingungsdämpferanordnungen fördern bei Relativdrehung zwischen der Primärseite und der Sekundärseite Fluid, im Allgemeinen inkompressibles Fluid, wie z.B. Öl, in Richtung zu wenigstens einer Gasfedereinheit, so dass einerseits ein Speicherdruck einer solchen Gasfedereinheit erhöht wird, andererseits durch diesen erhöhten Speicherdruck eine Rückstellkraft generiert wird, durch welche die Primärseite und die Sekundärseite in eine Neutral-Relativdrehlage bezüglich einander vorgespannt werden. Dabei können mehrere derartige Gasfedereinheiten parallel zueinander wirken. Auch können jeweils in Zuordnung zu einer Zugbelastung oder einer Schubbelastung, also für beide möglichen Relativdrehrichtungen zwischen Primärseite und Sekundärseite, jeweils eine bzw. mehrere Gasfedereinheiten vorgesehen sein, um sowohl in Zugrichtung, als auch in Schubrichtung durch Erhöhung des Speicherdrucks eine Dämpfungswirkung bzw. eine Rückstellcharakteristik erzielen zu können.

Die bei derartigen Gasfedereinheiten eingesetzten Trennelemente sind im Allgemeinen als Kolben ausgebildet, können sich also entlang einer Innenoberfläche der jeweils zugeordneten Zylinder verschieben, um dabei, je nachdem ob die Belastung durch das Fluid zunimmt oder abnimmt, das in einem jeweiligen Zylinder eingeschlossene Gasvolumen zu komprimieren oder eine Entspannung desselben zu erzielen. Die Verschiebung eines Kolbens entlang einer Innenoberfläche eines zugeordneten Zylinders erfordert einerseits jedoch die Überwindung eines Haftreibmoments und andererseits die Beschleunigung der trägen Masse des Kolbens, so dass insbesondere im Bereich vergleichsweise kleiner Drehmomentschwankungen die Entkopplungsgüte zwischen der Primärseite und der Sekundärseite beeinträchtigt werden kann.

Es ist die Aufgabe der vorliegenden Erfindung, eine Torsionsschwingungsdämpferanordnung mit wenigstens einer Gasfedereinheit vorzusehen, welche bei einfachem Aufbau eine verbesserte Dämpfungscharakteristik aufweist.

Erfindungsgemäß wird diese Aufgabe gelöst durch eine Torsionsschwingungsdämpferanordnung, insbesondere für den Antriebsstrang eines Fahrzeugs, umfassend eine Primärseite und eine gegen die Wirkung einer Dämpferfluidanordnung um eine Drehachse bezüglich der Primärseite drehbare Sekundärseite, wobei die Dämpferfluidanordnung wenigstens eine bei Relativdrehung der Primärseite bezüglich der Sekundärseite durch ein Fluid belastete Gasfedereinheit mit einem durch ein Trennelement von dem Fluid getrennten Gasvolumen in einem Zylinder umfasst, wobei das Trennelement in Abhängigkeit von der Druckdifferenz des Drucks des Fluids und des Gasdrucks in dem Zylinder verschiebbar ist und in Abhängigkeit von der Druckdifferenz verformbar ist.

Bei der erfindungsgemäßen Torsionsschwingungsdämpferanordnung werden bei dem bzw. ggf. mehreren Trennelementen zwei Mechanismen zur stärkeren bzw. auch geringeren Belastung des Gasvolumens in einem jeweiligen Zylinder kombiniert. Einerseits besteht für die Trennelemente die Möglichkeit, sich innerhalb eines zugeordneten Zylinders zu verschieben, also kolbenartig zu wirken. Dieser Mechanismus wird vor allem dann greifen, wenn vergleichsweise große Relativdrehungen zwischen Primärseite und Sekundärseite zu entsprechenden Druckanstiegen bzw. Verdrängungen von Fluid führen und mithin auch das kompressible Gasvolumen stark belastet wird. Bei kleineren Belastungen, wie sie im normalen Fahrzustand auftretende Drehungleichförmigkeiten in einem Antriebsstrang auslösen können, verschiebt sich das Trennelement grundsätzlich nicht kolbenartig bezüglich des dieses aufnehmenden Zylinders, sondern verformt sich membranartig, so dass die einer Verschiebung grundsätzlich entgegenwirkenden Haftreibungskräfte und auch Trägheitskräfte nicht bzw. deutlich weniger einer verstärkten oder geminderten Belastung des Gasvolumens entgegenwirken. Dies führt zu einer deutlich besseren Entkopplungsgüte zwischen Primärseite und Sekundärseite.

Beispielsweise kann der Aufbau derart sein, dass das Trennelement einen ringartigen ersten Kolbenbereich umfasst, welcher in Abhängigkeit von der Druckdifferenz entlang einer Innenoberfläche des Zylinders verschiebbar ist, und an dem ringartigen ersten Kolbenbereich einen membranartigen Verformungsbereich aufweist, welcher in Abhängigkeit von der Druckdifferenz verformbar ist. Der ringartige erste Kolbenbereich übernimmt also in seiner Wechselwirkung mit der Innenoberfläche des jeweils zugeordneten Zylinders die Funktionalität der kolbenartigen Verschiebung, während der membranartige Verformungsbereich die Be- bzw. Entlastung des Gasvolumens ohne eine gleichzeitig auch auftretende Verschiebung des ringartigen ersten Kolbenbereichs ermöglicht.

Um eine stabile Verbindung zwischen dem Verformungsbereich und dem ersten Kolbenbereich zu erhalten, wird vorgeschlagen, dass der Verformungsbereich wenigstens teilweise in das Material des ersten Kolbenbereichs eingebettet ist.

Der erste Kolbenbereich kann aus flexiblem Material aufgebaut sein, was einerseits dessen Verbindung mit dem Verformungsbereich erleichtert, andererseits eine dichte Wechselwirkung mit der Innenoberfläche des zugeordneten Zylinders ermöglicht.

Insbesondere dann, wenn der erste Kolbenbereich aus flexiblem Material aufgebaut ist, kann die Ausgestaltung auch derart sein, dass der Verformungsbereich im Wesentlichen vollständig in das Material des ersten Kolbenbereichs eingebettet ist.

Bei einer alternativen Ausgestaltungsform kann dann, wenn der erste Kolbenbereich aus flexiblem, also grundsätzlich verformbarem, elastischem Material aufgebaut ist, vorgesehen sein, dass der Verformungsbereich mit dem ersten Kolbenbereich integral aus dem gleichen Material aufgebaut ist.

Um eine Überlastung des Verformungsbereichs bei zu starker Druckänderung des Fluids, also vergleichsweise starker Drehung zwischen Primärseite und Sekundärseite, zu vermeiden, wird weiter vorgeschlagen, dass das Trennelement einen vermittels des Verformungsbereichs an dem ersten Kolbenbereich getragenen scheibenartigen zweiten Kolbenbereich umfasst. Auf diese Art und Weise wird sichergestellt, dass dann, wenn der Verformungsbereich in einem bestimmten Grenzausmaß verformt, eine weitergehende Verformung nicht auftreten wird und dann zwangsweise auch der erste Kolbenbereich sich im zugeordneten Zylinder verschieben wird. Hierzu ist vorzugsweise vorgesehen, dass der zweite Kolbenbereich bezüglich des ersten Kolbenbereichs in begrenztem Ausmaß in der Verschieberichtung des ersten Kolbenbereichs bewegbar ist.

Die Anlagekopplung des ersten Kolbenbereichs mit dem zweiten Kolbenbereich kann dadurch realisiert werden, dass der zweite Kolbenbereich in der Verschieberichtung des ersten Kolbenbereichs an wenigstens einer Seite desselben einen in Anlage an dem ersten Kolbenbereich bringbaren Scheibenbereich umfasst, wobei vorzugsweise vorgesehen ist, dass der zweite Kolbenbereich an beiden Seiten des ersten Kolbenbereichs einen Scheibenbereich umfasst. Um einen Druckausgleich zwischen dem Verformungsbereich und einem jeweiligen Scheibenbereich des zweiten Kolbenbereichs zu ermöglichen, wird weiter vorgeschlagen, dass in wenigstens einem Scheibenbereich wenigstens eine Durchtrittsöffnung vorgesehen ist.

Weiter kann vorgesehen sein, dass bei einem Scheibenbereich, welcher an einer fluidzugewandten Seite des ersten Kolbenbereichs und des Verformungsbereichs vorgesehen ist, der wenigstens einen Durchtrittsöffnung ein Abschließelement zugeordnet ist, welches die wenigstens eine Durchtrittsöffnung bei Positionierung des Trennelements mit maximal ausgedehntem Gasvolumen abschließt. Dies führt insbesondere dann, wenn eine jeweilige Gasfedereinheit in maximalem Ausmaß entlastet ist und auch über längere Zeit hinweg in diesem Zustand bleibt, zu einer deutlichen Entlastung des Verformungsbereichs, da dieser an seinen beiden Seiten im Wesentlichen den gleichen Druck erfahren wird.

Die Verbindung des zweiten Kolbenbereichs mit dem Verformungsbereich kann dadurch realisiert werden, dass der zweite Kolbenbereich in einem von dem ersten Kolbenbereich umgebenen zentralen Bereich des Verformungsbereichs am Verformungsbereich festgelegt ist. Hierzu kann beispielsweise vorgesehen sein, dass die beiden Scheibenbereiche vermittels eines eine Öffnung im Verformungsbereich durchsetzenden Verbindungselements miteinander verbunden sind.

Um vor allem bei kleinen Druckvariationen den Dämpfungsmechanismus von Reibeffekten möglichst frei zu halten, wird weiter vorgeschlagen, dass der zweite Kolbenbereich im Wesentlichen nicht in Kontakt mit der Innenoberfläche des Zylinders ist.

Die vorliegende Erfindung wird nachfolgend mit Bezug auf die beiliegenden Figuren detailliert beschrieben. Es zeigt:
- Fig. 1: eine Querschnittansicht einer als Gasfeder-Torsionsschwingungs-dämpfer ausgebildeten Torsionsschwingungsdämpferanordnung;
- Fig. 2: eine Schnittansicht eines Trennelements einer Gasfedereinheit der Torsionsschwingungsdämpferanordnung der Fig. 2;
- Fig. 3: eine der Fig. 2 entsprechende Ansicht einer alternativen Ausgestaltungsart eines Trennelements;
- Fig. 4: eine Schnittansicht eines ersten Kolbenbereichs eines Trennelements;
- Fig. 5: eine der Fig. 4 entsprechende Ansicht einer alternativen Ausgestaltungsform eines ersten Kolbenbereichs;
- Fig. 6: eine der Fig. 4 entsprechende Ansicht einer alternativen Ausgestaltungsform eines ersten Kolbenbereichs;
- Fig. 7: eine der Fig. 4 entsprechende Ansicht einer alternativen Ausgestaltungsform eines ersten Kolbenbereichs;
- Fig. 8: eine weitere Schnittansicht eines Trennelements in einem dieses verschiebbar aufnehmenden Zylinder;
- Fig. 9: das Trennelement der Fig. 8 in einer Bewegungsendstellung im Zylinder mit maximal erweitertem Gasvolumen einer Gasfedereinheit.

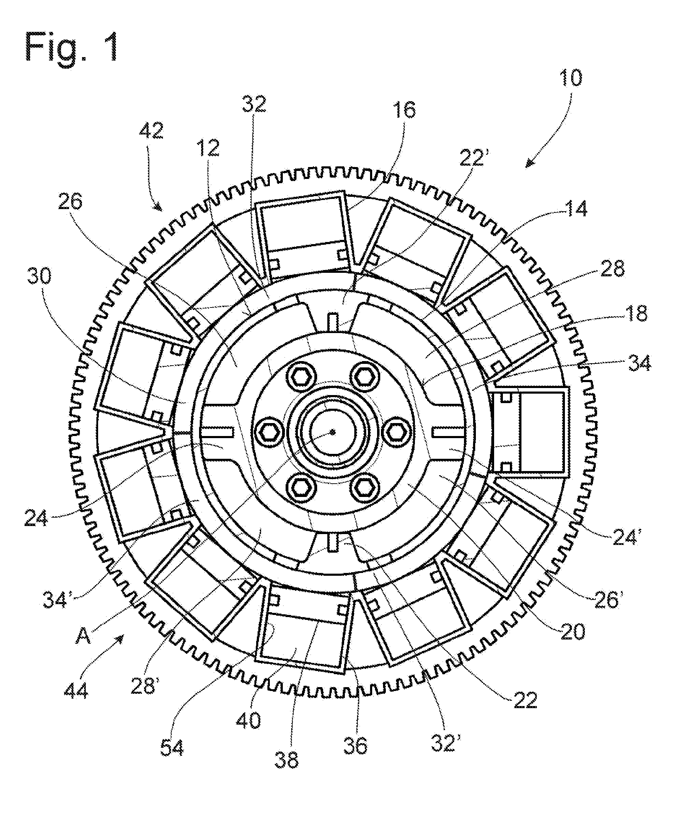

Die Fig. 1 zeigt im Querschnitt, bezogen auf eine Drehachse A, eine Torsionsschwingungsdämpferanordnung 10, welche nach Art eines Gasfeder-Torsionsschwingungsdämpfers aufgebaut ist. Eine Primärseite 12 dieser Torsionsschwingungsdämpferanordnung 10 umfasst ein äußeres Gehäuse 14, mit welchem drehfest eine Vielzahl sternförmig um die Drehachse A herum angeordneter Gasfedereinheiten 16 gekoppelt ist. Eine Sekundärseite 18 der Torsionsschwingungsdämpferanordnung 10 umfasst ein inneres Gehäuseteil 20, welches bezüglich des äußeren Gehäuseteils 14 um die Drehachse A grundsätzlich drehbar ist. Das äußere Gehäuseteil 14 weist zwei nach radial innen sich erstreckende, flügelartige Wandungen 22, 22' auf. Entsprechend weist das radial innere Gehäuseteil 20 zwei nach radial außen sich erstreckende flügelartige Wandungen 24, 24' auf. Die Wandungen 22, 22', 24, 24' liegen unter Einsatz jeweiliger Dichtungselemente nach radial innen bzw. radial außen fluiddicht am jeweiligen anderen Gehäuseteil an, so dass in Umfangsrichtung vier Druckkammern 26, 28, 26', 28' gebildet sind. Diese sind selbstverständlich in axialer Richtung durch Abschlusselemente fluiddicht abgeschlossen, die vorzugsweise an der Primärseite 12, also dem äußeren Gehäuseteil 14, angeordnet sind.

Zwischen den Gasfedereinheiten 16 und dem äußeren Gehäuseteil 14 ist ein ringartiger Zwischenraum 30 gebildet, der in vier Verbindungskammern 32, 32', 34, 34' unterteilt ist. Die Verbindungskammer 32 ist dabei der Druckkammer 26 zugeordnet und mit dieser in Fluidaustauschverbindung. Die Verbindungskammer 32' ist entsprechend der Druckkammer 26' zugeordnet. Die Verbindungskammer 34 ist der Druckkammer 28 zugeordnet, und die Verbindungskammer 34' ist der Verbindungskammer 28' zugeordnet. Bei Relativdrehung zwischen der Primärseite 12 und der Sekundärseite 18 ausgehend von der in Fig. 1 dargestellten Neutral-Relativdrehlage verringert sich das Volumen beispielsweise der im Zugzustand belasteten Druckkammern 26, 26', und darin enthaltenes, im Wesentlichen inkompressibles erstes Fluid, also beispielsweise Öl, wird in die zugehörigen Verbindungskammern 32, 32' verdrängt. Bei Relativdrehung in der anderen Richtung wird aus den beispielsweise dann im Schubzustand belasteten Druckkammern 28, 28' erstes Fluid in die zugeordneten Verbindungskammern 34, 34' verdrängt.

Jede der Gasfedereinheiten 16 umfasst einen Zylinder 36 und einen darin radial verschiebbaren Trennkolben 38 als Trennelement. Die Volumina 40 der Zylinder 36 sind mit einem kompressiblen zweiten Fluid, also beispielsweise Gas, gefüllt. Bei Druckanstieg in einer jeweiligen Verbindungskammer 32, 32', 34, 34' werden die mit dieser Verbindungskammer zusammenwirkenden Gasfedereinheiten 16 verstärkt belastet, so dass durch radiale Verschiebung der jeweiligen Trennkolben 38 das in den Volumina 40 enthaltene zweite Fluid komprimiert wird. Dabei wird durch den erhöhten Druck eine Rückstellkraft erzeugt, welche die Primärseite 14 und die Sekundärseite 18 in ihre Neutral-Relativdrehlage bezüglich einander vorspannt.

Man erkennt aus der vorangehenden Beschreibung, dass bei der Torsionsschwingungsdämpferanordnung 10 zwei Fluiddruckspeicheranordnungen 42, 44 vorgesehen sind. Eine erste davon umfasst die beiden parallel wirksamen Druckkammern 26, 26', die diesen zugeordneten Verbindungskammern 32, 32' und alle mit diesen Verbindungskammern 32, 32' zusammenwirkenden bzw. diese auch nach radial außen begrenzenden Gasfedereinheiten 16. Der Speicherdruck dieser ersten Fluiddruckspeicheranordnung 42 wird beispielsweise dann erhöht, wenn ein Antriebssystem im Zugzustand ist, also ein Drehmoment von einem Antriebsaggregat auf angetriebene Räder übertragen wird. Die zweite Fluiddruckspeicheranordnung 44 umfasst entsprechend die Druckkammer 28, 28', die Verbindungskammern 34, 34' sowie die beiden mit diesen Verbindungskammern 34, 34' zusammenwirkenden Gasfedereinheiten 36. Diese zweite Fluiddruckspeicheranordnung 44 kann im Schubzustand, also beispielsweise einem Motorbremszustand, wirksam sein.

Soll die Torsionsschwingungsdämpferanordnung 10 nur in einem dieser beiden Zustände, also Schubzustand oder Zugzustand, wirksam sein, so kann der Ringraum 30 in Umfangsrichtung ununterbrochen ausgebildet sein, so dass alle Gasfedereinheiten 16 mit den beiden in diesem Zustand dann in ihrem Volumen verringerten Druckkammern zusammenwirken können. Die beiden anderen Druckkammern sind durch Öffnungen zur Umgebung hin offen.

Es sei darauf hingewiesen, dass bei der in Fig. 1 dargestellten Ausgestaltungsform der Torsionsschwingungsdämpferanordnung 10 die beiden Gehäuseteile 14, 20 eine Fluidförderanordnung bilden, mit welcher abhängig von der Relativdrehrichtung erstes Fluid wahlweise in eine der Fluiddruckspeicheranordnungen 42, 44 geleitet wird. Konstruktionsbedingt weist diese Förderanordnung einen begrenzten Winkel-Arbeitsbereich auf, der im dargestellten Beispiel bei etwas unter 90° liegt. Bei Einsatz z.B. einer Zahnradpummpe kann ein praktisch unbegrenzter Relativdrehwinkelbereich zwischen der Primärseite 12 und der Sekundärseite 14 erreicht werden.

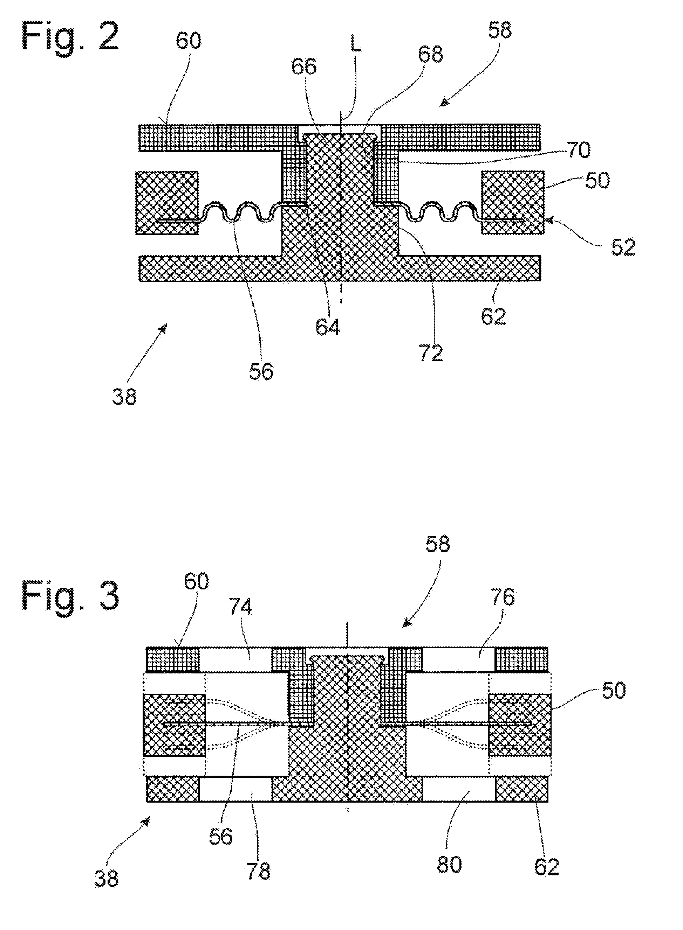

Die Fig. 2 zeigt im Längsschnitt, bezogen auf eine Längsmittenachse L desselben, ein als Trennkolben ausgebildetes Trennelement 38. Dieses Trennelement 38 umfasst einen ringartigen ersten Kolbenbereich 50, der mit seiner Außenumfangsfläche 52 an einer Innenumfangsfläche 54 eines in Fig. 1 erkennbaren Zylinders 36 einer jeweiligen Gasfedereinheit 16 in Richtung der Längsmittenachse L verschiebbar anliegt. Mit diesem ersten Kolbenbereich 50 ist ein aus flexiblem Material ausgebildeter membranartiger Verformungsbereich 56 verbunden, der im Allgemeinen eine ringartige Formgebung aufweist und in seinem radial innerhalb des ersten Kolbenbereichs 50 liegenden Abschnitt im Schnitt mäanderartig ausgebildet ist. Radial außen ist der Verformungsbereich 56 in das Material des ersten Kolbenbereichs 50 eingebettet, beispielsweise dadurch, dass der Kolbenbereich 50 aus Kunststoffmaterial oder dergleichen an den Verformungsbereich 56 angeformt oder angegossen wird oder dass der aus zwei ringartigen Teilen zusammengesetzte erste Kolbenbereich 50 beim Zusammenfügen der beiden ringartigen Teile den radial äußeren Bereich des Verformungsbereichs 56 einspannt.

In seinem radial inneren, zentralen Bereich trägt der Verformungsbereich 56 einen scheibenartigen zweiten Kolbenbereich 58. Dieser umfasst an jeder Seite des ersten Kolbenbereichs 50 - bezogen auf die Längsmittenachse L - jeweils ein Scheibenelement 60 bzw. 62. In ihrem zentralen Bereich, in welchem auch der Verformungsbereich 56 eine zentrale Öffnung 64 aufweist, sind diese beiden Scheibenelemente 60, 62 dadurch miteinander fest verbunden, dass ein Verbindungsansatz 66 des Scheibenelements 62 in eine Verbindungsaussparung 68 des Scheibenelements 60 eingreift und darin beispielsweise fomschlüssig durch Einrasten festgehalten ist. Der radial innere, zentrale Bereich des Verformungsbereichs 56 ist dabei zwischen axialen Ansätzen 70, 72 der beiden Scheibenelemente 60, 62 festgehalten und auch fluiddicht eingespannt, so dass durch die zentrale Öffnung 64 hindurch kein Fluidaustausch stattfinden kann. Die beiden Scheibenelemente 60, 62 können selbstverständlich auch in anderer Weise, beispielsweise durch Vernieten bei metallischen Teilen oder aber auch durch Verschmelzen von Kunststoffteilen, verbunden werden.

Man erkennt, dass jedes der beiden Scheibenelemente 60, 62 in seinem radial äußeren Bereich bezüglich des ersten Kolbenbereichs 52 einen axialen Abstand aufweist, so dass der zweite Kolbenbereich 58 grundsätzlich in Richtung der Längsmittenachse L in begrenztem Ausmaß bezüglich des ersten Kolbenbereichs 52 verschiebbar ist, und zwar so lange, bis ein jeweiliges Scheibenelement 60 bzw. 62 am ersten Kolbenbereich 52 anstößt.

Die Dimensionierung der Scheibenelemente 60, 62 ist derart gewählt, dass sie bei grundsätzlich gleicher Umfangskontur wie der erste Kolbenbereich 50, die wiederum angepasst ist an die Innenumfangskontur eines jeweiligen Zylinders 36, eine geringfügig kleinere Außenabmessung aufweisen, so dass zwar die Außenumfangsfläche 52 des ersten Kolbenbereichs 50 an der Innenumfangsfläche 54 anliegen wird, nicht jedoch die Scheibenelemente 60, 62 in Kontakt mit dieser Innenumfangsfläche 54 sind.

Bei Einsatz eines derartigen Trennelements 38 bei dem in Fig. 1 gezeigten Aufbau eines Gasfeder-Torsionsschwingungsdämpfers 10 ist also grundsätzlich das gesamte Trennelement 38 entlang der Innenoberfläche 54 in Richtung der Längsmittenachse L bewegbar, nämlich dadurch, dass der erste Kolbenbereich 50 sich gleitend an dieser Innenoberfläche 54 entlang bewegt. Dieser Bewegungzustand wird eintreten, wenn durch vergleichsweise starke Relativverdrehung zwischen Primärseite 12 und Sekundärseite 18 vergleichsweise viel inkompressibles Fluid aus einem jeweiligen Druckkammerpaar verdrängt wird und die zugehörigen Trennelemente 38 belastet. Bei diesem Vorgang wird auf Grund der vergleichsweise leichten Verformbarkeit des Verformungsbereichs 56 zunächst ausgehend von einem Zustand, in welchem der Druck in den betrachteten Verbindungskammern einerseits und den zugehörigen Zylindern 36 andererseits näherungsweise ausgeglichen ist, zunächst der zweite Kolbenbereich 58 sich so weit nach radial außen bewegen, bis beispielsweise das Scheibenelement 62 bei zunächst noch feststehendem ersten Kolbenbereich 50 an diesem anstößt. Eine weitere Verformung des Verformungsbereichs 56 wird dann nicht auftreten. Vielmehr wird durch die Belastung des Scheibenelements 62 bzw. auch des ersten Kolbenbereichs 50 das gesamte Trennelement 38 sich im zugehörigen Zylinder 36 nach radial außen verlagern. Nimmt der Druck in einer jeweiligen Verbindungskammer wieder entsprechend stark ab, wird sich dieser Bewegungsvorgang umkehren. Es wird dann zunächst der zweite Kolbenbereich 58 sich wieder in Richtung der Längsmittenachse L entgegengesetzt bewegen, bis bei zunächst feststehendem erstem Kolbenbereich 50 das Scheibenelement 60 an diesem anstößt und dann das gesamte Trennelement 38 sich gleitend entlang der Innenoberfläche 54 bewegt.

Treten nur vergleichsweise geringe Relativdrehungen zwischen der Primärseite 12 und der Sekundärseite 18 auf, welche entsprechend auch nur zu der Verdrängung vergleichsweise kleiner Fluidmengen aus den Druckkammern führen, wird sich lediglich der zweite Kolbenbereich 58 zur stärkeren Belastung bzw. auch Entlastung eines jeweiligen Gasvolumens 40 bewegen, ohne durch entsprechendes Anstoßen am ersten Kolbenbereich 50 diesen zur Bewegung mitzunehmen. Dies bedeutet, dass vor allem bei vergleichsweise kleinen Drehmomentschwankungen oder kleinen zu übertragenden Drehmomenten die Trennelemente 38 im Wesentlichen ohne Reibungskräfte ein jeweiliges Gasvolumen verstärkt belasten können. Dies verbessert die Entkopplungsgüte vor allem im Bereich kleinerer Drehmomentschwankungen erheblich. Gleichwohl kann eine Überlastung des flexiblen Verformungsbereichs 56, der beispielsweise aus einer passend geformten Kunststoffmembran gebildet ist, durch die beiden Scheibenelemente 60, 62 bzw. vermieden werden.

Da mit diesem Aufbau kleinere Drehmomentschwankungen praktisch ohne Reibeffekte gedämpft werden können, kann der erste Kolbenbereich 50 so gestaltet sein, dass er vergleichsweise stark an der zugeordneten Innenoberfläche 54 anliegt, was zwar zu einer erhöhten Reibwechselwirkung führt. Diese ist auf Grund der Tatsache, dass die Verschiebung des gesamten Trennelements 38 nur bei vergleichsweise starken Drehmomentschwankungen erforderlich ist, zu akzeptieren, hilft jedoch gleichzeitig dabei, den fluiddichten Abschluss eines jeweils zugehörigen Gasvolumens zu verbessern.

Die Fig. 3 zeigt eine etwas abgewandelte Ausgestaltungsform eines Trennelements 38, bei welcher zunächst erkennbar ist, dass der flexible Verformungsbereich 56 hier mit im Wesentlichen planer Struktur ausgebildet ist, so dass dieser auf Grund seiner inhärenten Flexibilität bzw. auch Elastizität eine Rückstellkraft erzeugen kann, welche den zweiten Kolbenbereich 58 bezüglich des ersten Kolbenbereichs 50 in die zentrierte, in Fig. 3 gezeigte Positionierung vorspannt, ausgehend jeweils von den in Fig. 3 mit Strichlinie eingezeichneten maximal verschobenen Positionierungen.

Man erkennt in Fig. 3 weiter, dass in den Scheibenelementen 60, 62 jeweils Öffnungen 74, 76 bzw. 78, 80 gebildet sind. Durch diese Öffnungen ist sichergestellt, dass, obgleich die Scheibenelemente 60, 62 zur Innenoberfläche 54 eines Zylinders einen geringen spaltartigen Zwischenraum lassen, bei einer Verlagerung des zweiten Kolbenbereichs 58 bezüglich des ersten Kolbenbereichs 50 Fluid bzw. Gas leicht aus dem Zwischenraum zwischen dem ersten Kolbenbereich 50 und dem Verformungsbereich 56 einerseits und dem jeweils darauf zu bewegten Scheibenelement 60 bzw. 62 andererseits verdrängt werden kann. Dies stellt auch bei kleinsten Drehmomentschwankungen und Relativdrehbewegungen zwischen der Primärseite 12 und der Sekundärseite 18 eine ausreichende Bewegbarkeit des zweiten Kolbenbereichs 58 sicher.

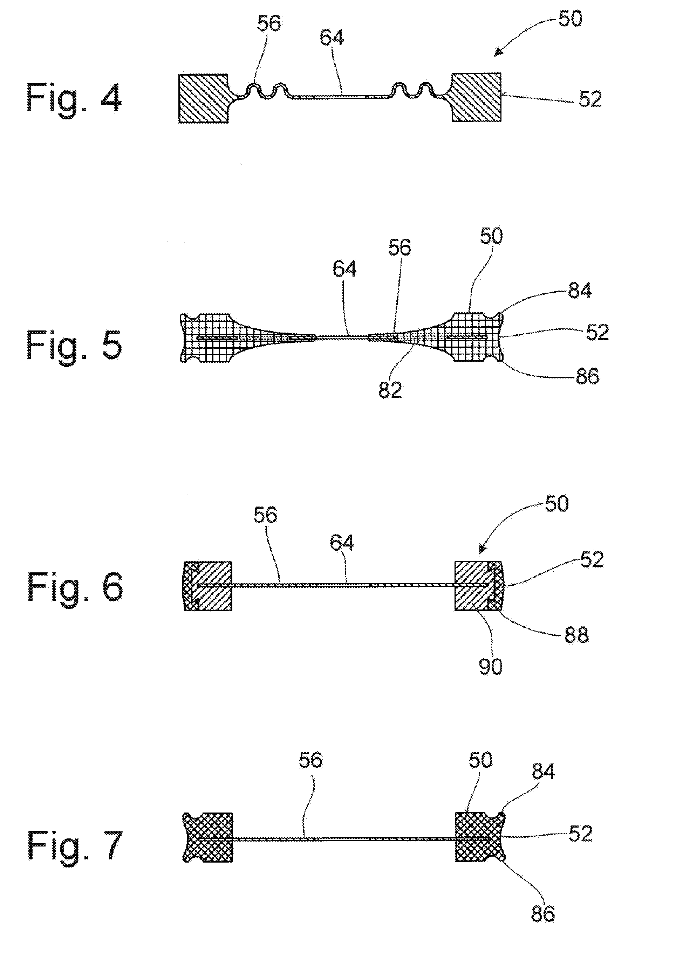

In Fig. 4 ist ein erster Kolbenbereich 50 gezeigt, der mit dem hier wieder mäanderartig bzw. gewellt ausgebildeten Verformungsbereich 56 integral, d.h. in einem Bauteil und somit aus dem gleichen Aufbaumaterial aufgebaut ist. Bei entsprechend dünner Ausgestaltung im Verformungsbereich 56 ist dieses Material, beispielsweise Kunststoffmaterial, grundsätzlich verformbar. Bei Einsatz eines Kunststoffmaterials ist gleichzeitig auch für eine vergleichsweise gute Verschiebbarkeit entlang der Innenoberfläche 54 gesorgt. Vorzugsweise wird hier ein derartiges Bauteil Elastomermaterial, wie z.B. Gummi eingesetzt.

Die Fig. 4 zeigt eine Ausgestaltungsform, bei welcher der erste Kolbenbereich 50 aus vergleichsweise flexiblem Material, wie z.B. Gummi, geformt ist und der Verformungsbereich 56 im Wesentlichen vollständig in dieses Material eingebettet ist. Um hier eine verbesserte Anbindung zu schaffen, können in dem mit dem Material des ersten Kolbenbereichs 50 umgebenen Bereich des Verformungsbereichs 56 von diesem Material durchgriffene Öffnungen 82 gebildet sein. An seiner Außenumfangsfläche 52 bildet der erste Kolbenbereich 50 eine konkave Struktur mit zwei Dichtlippenbereichen 84, 86, die unter dem Druck des Gases einerseits und des Fluids andererseits verstärkt gegen die Innenoberfläche 54 gepresst werden, womit eine noch bessere Dichtwirkung erzielt werden kann.

Bei der in Fig. 6 gezeigten Ausgestaltungsvariante ist die Außenumfangsfläche 52 des ersten Kolbenbereichs 50 durch einen ringartigen Materialbereich 88 an einem ringartigen Körper 90 des ersten Kolbenbereichs 50 gebildet. Dieser Körper 90 kann aus vergleichsweise starrem Material aufgebaut sein, während der ringartige Materialbereich 88 aus einem Material aufgebaut ist, das hinsichtlich der Innenoberfläche 54 eines zugeordneten Zylinders 36 sehr gute Gleiteigenschaften aufweist. Auch erkennt man in Fig. 6 eine konvexe Gestaltung der Außenoberfläche 52, welche das Einführen eines derartigen ersten Kolbenbereichs 50 in einen Zylinder 36 erleichtert. Diese konvexe Ausgestaltung kann durch zwei keil- bzw. rampenartig aufeinander zu laufende Schrägflächen erfolgen, die auch asymmetrisch gestaltet sein können, um auf diese Art und Weise eine bevorzugte Förderrichtung zu erzielen, insbesondere des an der Innenoberfläche 54 anhaftenden Fluids.

In Fig. 7 ist eine Ausgestaltungsform gezeigt, bei welcher der im Wesentlichen planar ausgebildete flexible Verformungsbereich 56 in seinem Außenumfangsbereich wieder in das Aufbaumaterial des ersten Kolbenbereichs 50 eingebettet ist. Dieser ist an seiner Außenumfangsfläche wieder konvex gewölbt gebildet mit den beiden Dichtlippen 84, 86.

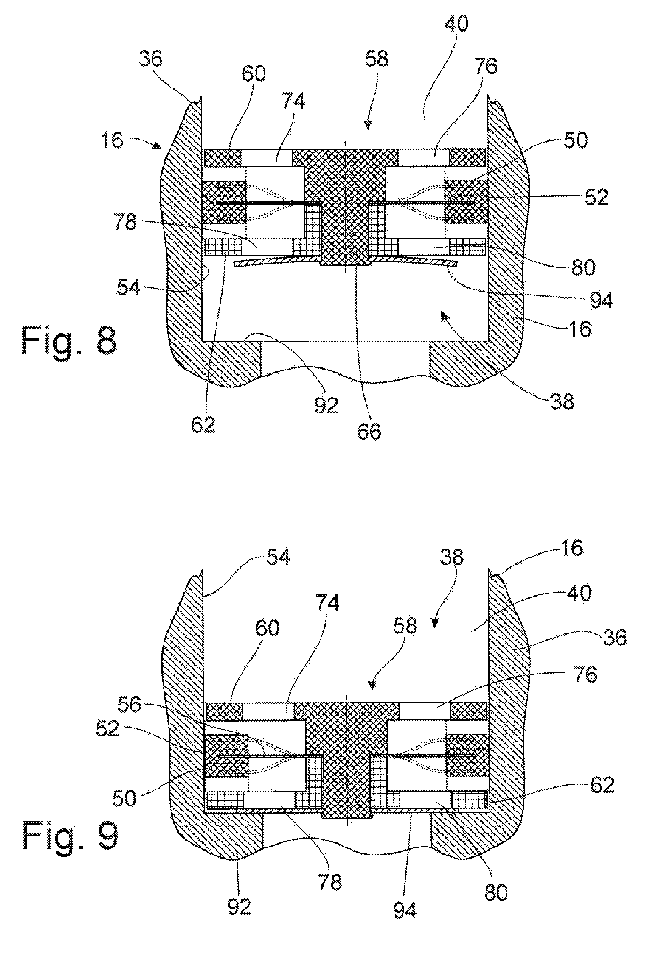

Die Fig. 8 und 9 zeigen eine weitere Ausgestaltungsform eines Trennelements 38 in einem Zylinder 36 einer Gasfedereinheit 16. Der in dem Zustand der Fig. 8 unter dem Trennelement 38 liegende Bereich des Zylinders 36 ist mit dem inkompressiblen Fluid gefüllt und in Verbindung mit einer Verbindungskammer bzw. einer oder mehreren Druckkammern. Der über dem Trennelement 38 liegende Bereich enthält das Gasvolumen 40. Das Trennelement 38 weist einen Aufbau auf, der im Wesentlichen dem in Fig. 3 gezeigten entspricht. In Zuordnung zu dem einem Zylinderbodenbereich 92 zugewandt positionierten Scheibenelement 62 bzw. den darin vorgesehen Öffnungen 78, 80 ist ein beispielsweise ringartig oder scheibenartig ausgebildetes Abschließelement 94 vorgesehen, das vermittels des Ansatzes 66 am zweiten Kolbenbereich 58 getragen ist. In seinem Grundzustand, in welchem es also nicht durch externe Kräfte beaufschlagt ist, ist dieses Abschließelement 94 so positioniert, dass es die Öffnungen 78, 80 nicht abschließt, wie dies in Fig. 8 gezeigt ist. Nähert sich jedoch das Trennelement 38 dem Zylinderboden 92 an, so wird durch den Zylinderboden 92, der einen Bewegungsanschlag für das Trennelement 38 bildet, das Abschließelement verformt, so dass es die Öffnungen 58, 80 bedeckt und damit abschließt. Die Folge davon ist, dass dann, wenn das Trennelement 38 diese Endstellung erreicht, der Druck des nunmehr zwischen dem Abschließelement 94 und dem Verformungsbereich 56 eingeschlossenen Fluids im Wesentlichen auch dem Druck des Gases in dem Volumen 40 entspricht. Der flexible membranartige Verformungsbereich 56 wird somit in diesem Zustand von beiden Seiten her mit im Wesentlichen dem gleichen Druck belastet, so dass selbst dann, wenn der Druck in einer zugehörigen Verbindungskammer oder einer Druckkammer weiter abfällt, beispielsweise auf Grund eines Druckverlustes durch ein Leck oder dergleichen, eine übermäßige Belastung des Verformungsbereichs 56 durch den Druck im Gasvolumen 40 vermieden werden kann.

Es wird darauf hingewiesen, dass diese Sicherungsfunktionalität gegen Überlastung des Verformungsbereichs 56 beispielsweise auch dadurch erzielt werden kann, dass die abzuschließenden Öffnungen 78, 80 so dimensioniert bzw. positioniert sind, dass sie bei an dem Zylinderboden 92 anliegendem Scheibenelement 62 durch den Zylinderboden 92 vollständig überdeckt sind.

Mit dem erfindungsgemäßen Aufbau eines Trennelements können die Vorteile einer Funktionalität eines Kolbens und einer Funktionalität einer Membran in verschiedenen Druckzuständen bzw. Relativdrehzuständen jeweils besonders vorteilhaft genutzt werden. Dazu können selbstverständlich verschiedene vorangehend beschriebene Ausgestaltungsvarianten kombiniert werden. So könnten die in den Fig. 4 bis 7 gezeigten Ausgestaltungsformen selbstverständlich bei allen in den Fig. 2, 3, 8, 9 gezeigten Trennelementen eingesetzt werden. Die insbesondere in den Fig. 3 und 8, 9 gezeigten Öffnungen können selbstverständlich eine beliebige Formgebung oder Größe aufweisen. Tatsächlich könnte dazu ein jeweiliges Scheibenelement auch mit nach radial außen greifenden und zwischen sich Öffnungen bildenden Armen ausgebildet sein, die in ihrem Außenumfangsbereich dann möglicherweise verbunden durch einen radial äußeren Materialring eines jeweiligen Scheibenelements in Anlage am ersten Kolbenbereich kommen können. Weiter ist es selbstverständlich, dass derartige Trennelemente auch kombiniert werden können mit andersartigen Trennelementen in anderen Gasfedereinheiten, welche nur kolbenartig wirken, also nicht auch noch die vorangehend beschriebene Membranfunktionalität aufweisen.

## Patentansprüche

1. Torsionsschwingungsdämpferanordnung, insbesondere für den Antriebsstrang eines Fahrzeugs, umfassend eine Primärseite (12) und eine gegen die Wirkung einer Dämpferfluidanordnung um eine Drehachse (A) bezüglich der Primärseite (12) drehbare Sekundärseite (18), wobei die Dämpferfluidanordnung wenigstens eine bei Relativdrehung der Primärseite bezüglich der Sekundärseite durch das Fluid belastete Gasfedereinheit (16) mit einem durch ein Trennelement (38) von im Fluid getrennten Gasvolumen (40) in einem Zylinder (36) umfasst, wobei das Trennelement (38) in Abhängigkeit von der Druckdifferenz des Drucks des Fluids und des Gasdrucks in dem Zylinder (36) verschiebbar ist und in Abhängigkeit von der Druckdifferenz verformbar ist.

2. Torsionsschwingungsdämpferanordnung nach Anspruch 1,
**dadurch gekennzeichnet, dass** das Trennelement (38) einen ringartigen ersten Kolbenbereich (50) umfasst, welcher in Abhängigkeit von der Druckdifferenz entlang einer Innenoberfläche (54) des Zylinders (36) verschiebbar ist, und an dem ringartigen ersten Kolbenbereich (50) einen membranartigen Verformungsbereich (56) aufweist, welcher in Abhängigkeit von der Druckdifferenz verformbar ist.

3. Torsionsschwingungsdämpferanordnung nach Anspruch 2,
**dadurch gekennzeichnet, dass** der Verformungsbereich (56) wenigstens teilweise in das Material des ersten Kolbenbereichs (50) eingebettet ist.

4. Torsionsschwingungsdämpferanordnung nach Anspruch 2 oder 3,
**dadurch gekennzeichnet, dass** der erste Kolbenbereich (50) mit flexiblem Material aufgebaut ist.

5. Torsionsschwingungsdämpferanordnung nach Anspruch 3 und Anspruch 4,
**dadurch gekennzeichnet, dass** der Verformungsbereich (56) im Wesentlichen vollständig in das Material des ersten Kolbenbereichs (50) eingebettet ist.

6. Torsionsschwingungsdämpferanordnung nach Anspruch 4,
**dadurch gekennzeichnet, dass** der Verformungsbereich (56) mit dem ersten Kolbenbereich (50) integral aus dem gleichen Material aufgebaut ist.

7. Torsionsschwingungsdämpferanordnung nach einem der Ansprüche 2 bis 6,
**dadurch gekennzeichnet, dass** das Trennelement (38) einen vermittels des Verformungsbereichs (56) an dem ersten Kolbenbereich (50) getragenen scheibenartigen zweiten Kolbenbereich (58) umfasst.

8. Torsionsschwingungsdämpferanordnung nach Anspruch 7,
**dadurch gekennzeichnet, dass** der zweite Kolbenbereich (58) bezüglich des ersten Kolbenbereichs (50) in begrenztem Ausmaß in der Verschieberichtung des ersten Kolbenbereichs (50) bewegbar ist.

9. Torsionsschwingungsdämpferanordnung nach Anspruch 8,
**dadurch gekennzeichnet, dass** der zweite Kolbenbereich (58) in der Verschieberichtung des ersten Kolbenbereichs (50) an wenigstens einer Seite desselben einen in Anlage an dem ersten Kolbenbereich (50) bringbaren Scheibenbereich (60, 62) umfasst.

10. Torsionsschwingungsdämpferanordnung nach Anspruch 9,
**dadurch gekennzeichnet, dass** der zweite Kolbenbereich (58) an beiden Seiten des ersten Kolbenbereichs (50) einen Scheibenbereich (60, 62) umfasst.

11. Torsionsschwingungsdämpferanordnung nach Anspruch 9 oder 10,
**dadurch gekennzeichnet, dass** in wenigstens einem Scheibenbereich (60, 62) wenigstens eine Durchtrittsöffnung (74, 76, 78, 80) vorgesehen ist.

12. Torsionsschwingungsdämpferanordnung nach Anspruch 11,
**dadurch gekennzeichnet, dass** bei einem Scheibenbereich (62), welcher an einer fluidzugewandten Seite des ersten Kolbenbereichs (50) und des Verformungsbereichs (56) vorgesehen ist, der wenigstens einen Durchtrittsöffnung (78, 80) ein Abschließelement (94) zugeordnet ist, welches die wenigstens eine Durchtrittsöffnung (78, 80) bei Positionierung des Trennelements (38) mit maximal ausgedehntem Gasvolumen abschließt.

13. Torsionsschwingungsdämpferanordnung nach einem der Ansprüche 7 bis 12,
**dadurch gekennzeichnet, dass** der zweite Kolbenbereich (58) in einem von dem ersten Kolbenbereich (50) umgebenen zentralen Bereich des Verformungsbereichs (56) am Verformungsbereich (56) festgelegt ist.

14. Torsionsschwingungsdämpferanordnung nach Anspruch 9 und Anspruch 13,
**dadurch gekennzeichnet, dass** die beiden Scheibenbereiche (60, 62) vermittels eines eine Öffnung (64) im Verformungsbereich (56) durchsetzenden Verbindungselements (66) miteinander verbunden sind.

15. Torsionsschwingungsdämpferanordnung nach einem der Ansprüche 7 bis 13,
**dadurch gekennzeichnet, dass** der zweite Kolbenbereich (58) im Wesentlichen nicht in Kontakt mit der Innenoberfläche (54) des Zylinders (36) ist.
